# EUROPEAN PATENT SPECIFICATION

(11) **EP 3 875 898 B1**
(45) Date of publication and mention of the grant of the patent: **08.01.2025**
(21) Application number: 18938408.4
(22) Date of filing: 31.10.2018
(51) Int. Cl.: G01B 21/00, A63F 13/211, A63F 13/22, G06F 3/01, G06T 7/246, G06V 40/20

(54) **TRACKER CALIBRATION DEVICE, TRACKER CALIBRATION METHOD, AND PROGRAM**
KALIBRIERUNGSVORRICHTUNG FÜR EINEN VERFOLGER, KALIBRIERUNGSVERFAHREN FÜR EINEN VERFOLGER UND PROGRAMM
DISPOSITIF D'ÉTALONNAGE DE SUIVEUR, PROCÉDÉ D'ÉTALONNAGE DE SUIVEUR ET PROGRAMME

(43) Date of publication of application: 08.09.2021
(73) Proprietor: Sony Interactive Entertainment Inc., Tokyo 108-0075 (JP)
(72) Inventor: OHASHI, Yoshinori, Tokyo 108-0075 (JP)
(74) Representative: Müller Hoffmann & Partner
(86) International application number: PCT/JP2018/040530
(87) International publication number: WO 2020/090042

(56) References cited:
- EP-B1- 1 071 369
- JP-A- 2002 512 069
- JP-A- 2002 528 168
- JP-A- 2007 535 373
- JP-A- 2008 507 367
- JP-A- 2016 101 640
- DANIEL PUSTKA ET AL: "Spatial relationship patterns", MIXED AND AUGMENTED REALITY, 2006. ISMAR 2006. IEEE/ACM INTERNATIONAL SYMPOSIUM ON, IEEE, PI, 22 October 2006 (2006-10-22), pages 88 - 97, XP058378968, ISBN: 978-1-4244-0650-0, DOI: 10.1109/ISMAR.2006.297799

## Description

### [Technical Field]

The present invention relates to a tracker calibration apparatus, a tracker calibration method, and a program.

### [Background Art]

A body tracking technology is known and used for implementing inverse kinematics (IK) based on data indicating positions and orientations of a plurality of trackers worn by a user for the purpose of estimating the positions and orientations of a plurality of body parts of the user wearing the plurality of trackers, including the positions and orientations of the body parts wearing no tracker.

Further, in recent years, various types of trackers are offered by various vendors. Some of the trackers, for example, perform tracking according to the results of detection by a plurality of sensors disposed around the trackers, such as cameras and infrared sensors. Some other trackers, for example, use a SLAM (Simultaneous Localization and Mapping) technology and perform tracking according to the results of analysis of images captured by cameras disposed on the trackers. Using the SLAM technology also makes it possible to not only perform tracking, but also scan the environment and realistically display the structure of a real space as a virtual object. Further, some trackers perform tracking, for example, by using the results of measurements made by an inertial sensor or a GPS (Global Positioning System) module.

The paper by Daniel Pustka et al.: "Spatial relationship patterns", MIXED ANDAUGMENTED REALITY, 2006, ISMAR 2006. IEEE/ ACM INTERNATIONAL SYMPOSIUM ON; IEEE, PI, 22 October 2006, pages 88 to 97, XP058378968, introduces a formal model for representing spatial relationship patterns (which describe coordinate systems and known transformations), and presents a small catalog of patterns frequently used in augmented reality systems. Furthermore, an algorithm to identify such patterns at runtime is disclosed.

EP 1 071 369 B1 relates to a method for tracking motion of a body having a tracking device, wherein measurements as to such a tracking device are made.

### [Summary]

### [Technical Problems]

The above-mentioned trackers have advantages and disadvantages depending on the type. In some cases, therefore, it is preferable that a plurality of types of trackers be used together. Further, the positions of trackers are generally expressed in an independent coordinate system that varies from one type of tracker to another. Therefore, in a case where a plurality of types of trackers are used together, calibration needs to be performed in advance so that the positions of the plurality of types of trackers can be expressed in a single coordinate system. Further, the calibration needs to be performed while the relative positions and postures of the plurality of types of trackers are fixed.

If the calibration is performed on the assumption that the plurality of types of trackers are at the same position, the result of the calibration is in significant error. Although the occurrence of such an error can possibly be suppressed by performing calibration using advance measurements of relative positions of the plurality of types of trackers, it is troublesome to make such advance measurements.

The present invention has been made in view of the above circumstances. An object of the present invention is to provide a tracker calibration apparatus, a tracker calibration method, and a program that make it possible to accurately calibrate a plurality of types of trackers without measuring their relative positions in advance.

### [Solution to Problems]

The above problems are solved by the subject-matter of each of the independent claims.

In order to solve the above problems, a tracker calibration apparatus according to the present invention includes a first tracker data acquisition section, a second tracker data acquisition section, and an estimation section. The first tracker data acquisition section acquires a plurality of pieces of first tracker data. The first tracker data indicates a position of a first tracker that is measured during calibration and expressed in a first coordinate system. The calibration is performed while relative position and orientation of a second tracker are fixed relative to the first tracker. The second tracker data acquisition section acquires a plurality of pieces of second tracker data. The second tracker data indicates the position and orientation of the second tracker that is measured during the calibration and expressed in a second coordinate system independent of the first coordinate system. Based on the plurality of pieces of the first tracker data and the plurality of pieces of the second tracker data, the estimation section estimates parameter values for converting the positions expressed in the second coordinate system into expressions in the first coordinate system and the relative position of the second tracker relative to the first tracker.

According to an aspect of the present invention, the tracker calibration apparatus further includes a sample data generation section. The sample data generation section generates a plurality of pieces of sample data including the first and second tracker data associated with each other in measurement timing. Based on the plurality of pieces of the sample data, the estimation section estimates parameter values for converting the positions expressed in the second coordinate system into expressions in the first coordinate system and the relative position of the second tracker relative to the first tracker.

In the above aspect, the sample data generation section may generate the plurality of pieces of the sample data according to the first and second tracker data selected in such a manner as to increase variation in orientation.

Further, according to time series of at least one of velocity, acceleration, and angular velocity of the first tracker that is identified based on the plurality of pieces of the first tracker data and time series of at least one of velocity, acceleration, and angular velocity of the second tracker that is identified based on the plurality of pieces of the second tracker data, the sample data generation section may generate the plurality of pieces of the sample data that correspond to each other in measurement timing.

In the above aspect, according to norm time series of at least one of velocity, acceleration, and angular velocity of the first tracker and norm time series of at least one of velocity, acceleration, and angular velocity of the second tracker that are identified based on the plurality of pieces of the second tracker data, the sample data generation section may generate the plurality of pieces of the sample data that correspond to each other in measurement timing.

Further, according to an aspect of the present invention, the first tracker and the second tracker are disposed in a housing while the relative position and orientation of the second tracker are fixed relative to the first tracker.

Further, according to an aspect of the present invention, the first tracker and the second tracker are different types of trackers.

Further, according to an aspect of the present invention, after the parameter values for converting the positions expressed in the second coordinate system into the expressions in the first coordinate system and the relative position of the second tracker relative to the first tracker are estimated by the estimation section during the calibration, the first tracker and the second tracker may be separately used. Additionally, during the calibration performed again in a state where the relative position and orientation of the second tracker relative to the first tracker are fixed so as to be different from those estimated during the last calibration after the separate use of the first and second trackers, the estimation section estimates the relative position of the second tracker relative to the first tracker that is different from the relative position estimated during the last calibration.

Further, a tracker calibration method according to the present invention includes a step of acquiring a plurality of pieces of first tracker data indicating a position of a first tracker that is measured during calibration performed while relative position and orientation of a second tracker are fixed relative to the first tracker and expressed in a first coordinate system, a step of acquiring a plurality of pieces of second tracker data indicating the position and orientation of the second tracker that is measured during the calibration and expressed in a second coordinate system independent of the first coordinate system, and a step of estimating, based on the plurality of pieces of the first tracker data and the plurality of pieces of the second tracker data, parameter values for converting the positions expressed in the second coordinate system into expressions in the first coordinate system and the relative position of the second tracker relative to the first tracker.

Further, a program according to the present invention causes a computer to execute a procedure of acquiring a plurality of pieces of first tracker data indicating a position of a first tracker that is measured during calibration performed while relative position and orientation of a second tracker are fixed relative to the first tracker and expressed in a first coordinate system, a procedure of acquiring a plurality of pieces of second tracker data indicating the position and orientation of the second tracker that is measured during the calibration and expressed in a second coordinate system independent of the first coordinate system, and a procedure of estimating, based on the plurality of pieces of the first tracker data and the plurality of pieces of the second tracker data, parameter values for converting the positions expressed in the second coordinate system into expressions in the first coordinate system and the relative position of the second tracker relative to the first tracker.

### [Brief Description of Drawings]

[FIG. 1]

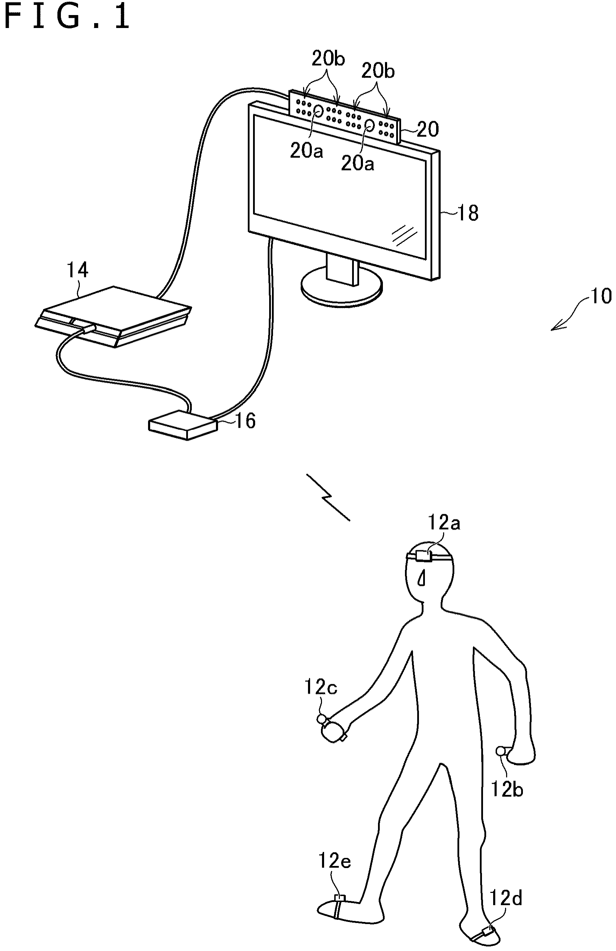

   FIG. 1 is a diagram illustrating a configuration example of an entertainment system according to an embodiment of the present invention.
[FIG. 2]

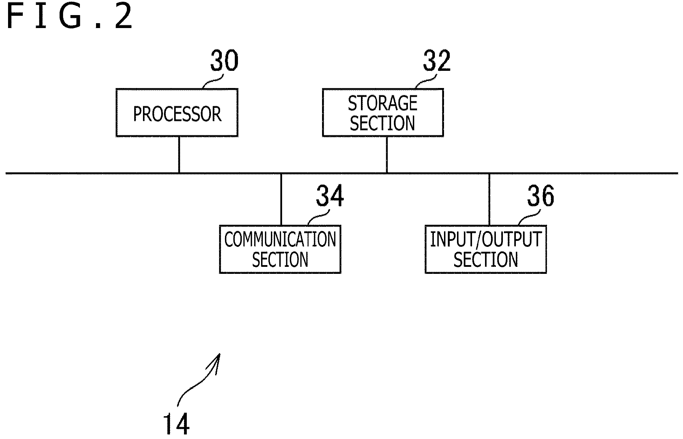

   FIG. 2 is a diagram illustrating a configuration example of an entertainment apparatus according to the embodiment of the present invention.
[FIG. 3]

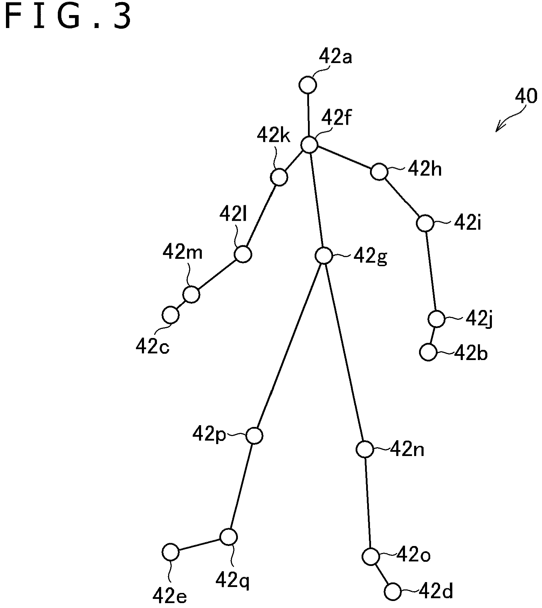

   FIG. 3 is a diagram illustrating an example of a skeleton model.
[FIG. 4]

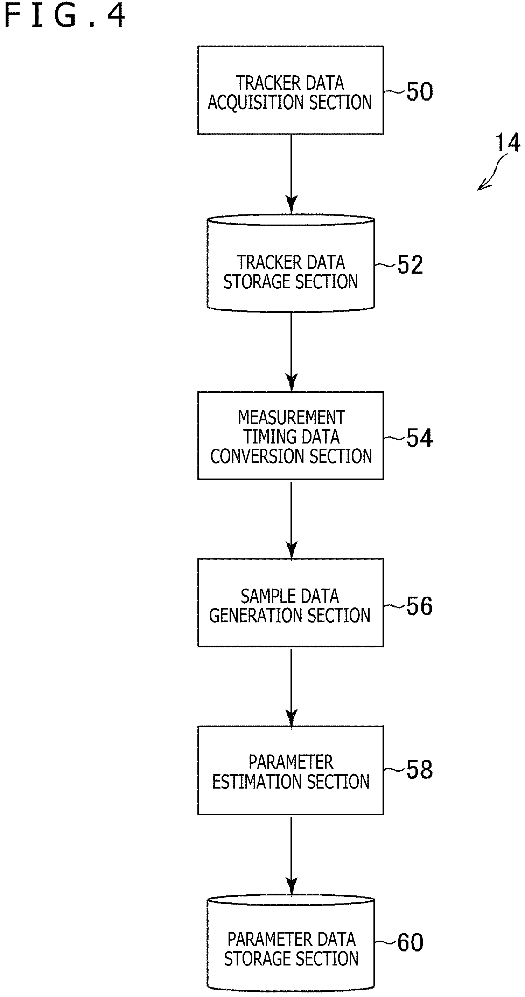

   FIG. 4 is a functional block diagram illustrating examples of functions implemented by the entertainment apparatus according to the embodiment of the present invention.
[FIG. 5]

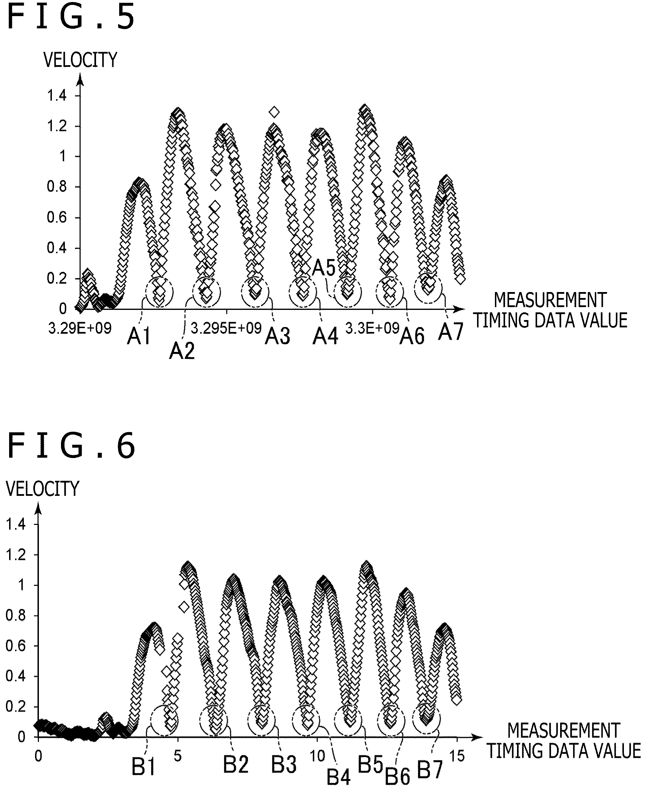

   FIG. 5 is a schematic diagram illustrating an example of relation between measurement timing data values and velocities regarding a tracker of a first type.
[FIG. 6]
   FIG. 6 is a schematic diagram illustrating an example of relation between measurement timing data values and velocities regarding a tracker of a second type.
[FIG. 7]

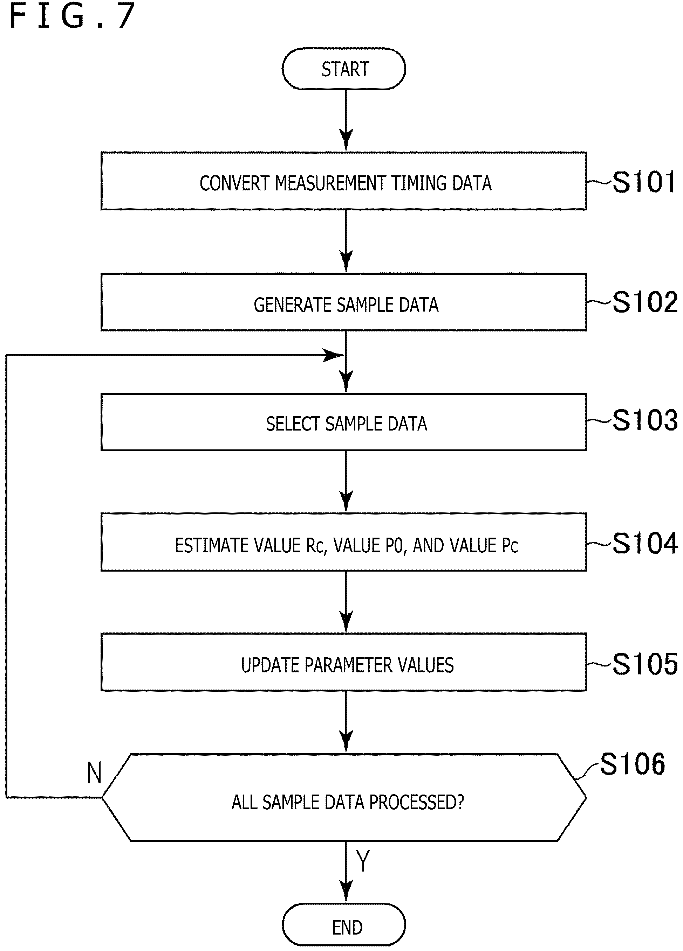

   FIG. 7 is a flowchart illustrating an example of processing performed by the entertainment apparatus according to the embodiment of the present invention.
[FIG. 8]

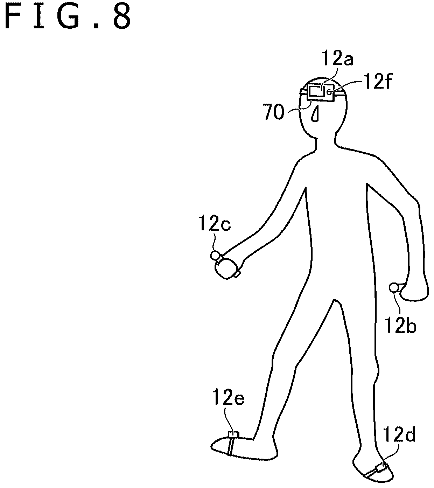

   FIG. 8 is a diagram illustrating another example of a tracker according to the embodiment of the present invention.

### [Description of Embodiment]

FIG. 1 is a diagram illustrating a configuration example of an entertainment system 10 according to an embodiment of the present invention. FIG. 2 is a diagram illustrating a configuration example of an entertainment apparatus 14 according to the present embodiment.

As illustrated in FIG. 1, the entertainment system 10 according to the present embodiment includes a plurality of trackers 12 (trackers 12a to 12e in the example of FIG. 1), the entertainment apparatus 14, a relay apparatus 16, a display 18, and a camera/microphone unit 20.

The trackers 12 according to the present embodiment are, for example, devices for tracking positions and orientations of the trackers 12. In the present embodiment, the tracker 12a, the tracker 12b, the tracker 12c, the tracker 12d, and the tracker 12e are respectively worn on the head, left hand, right hand, left foot, and right foot of a user. As illustrated in FIG. 1, the tracker 12b and the tracker 12c may be adapted to be grasped by a hand of the user.

In the present embodiment, the positions and orientations identified by the tracker 12a, the tracker 12b, the tracker 12c, the tracker 12d, and the tracker 12e correspond respectively to the positions and orientations of the head, left hand, right hand, left foot, and right foot of the user. As described above, the plurality of trackers 12 in the present embodiment identify the positions and orientations of a plurality of body parts included in the body of the user.

Further, a camera is disposed on the tracker 12a in the present embodiment. A SLAM technology is used to track the tracker 12a according to the results of analysis of images captured by the camera disposed on the tracker 12a.

Further, the tracker 12b, the tracker 12c, the tracker 12d, and the tracker 12e perform tracking of the trackers 12 according to the results of detection by a plurality of sensors disposed around the trackers 12, such as cameras and infrared sensors. In this instance, the positions and orientations of the trackers 12 may be identified based on images including the images of the trackers 12 that are captured by later-described cameras 20a included in the camera/microphone unit 20.

As described above, in the present embodiment, the tracker 12b, the tracker 12c, the tracker 12d, and the tracker 12e are different in type from the tracker 12a. Hereinafter, the tracker 12a is referred to as the tracker 12 of the first type while the tracker 12b, the tracker 12c, the tracker 12d, and the tracker 12e are referred to as the trackers 12 of the second type.

Further, in the present embodiment, the position of the tracker 12 of the first type and the positions of the trackers 12 of the second type are expressed individually in coordinate systems independent of each other. Hereinafter, the coordinate system for expressing the position of the tracker 12 of the first type is referred to as the first coordinate system while the coordinate system for expressing the position of the trackers 12 of the second type is referred to as the second coordinate system. It should be noted that the position and orientation of the tracker 12 of the first type may be expressed in the first coordinate system, and that the positions and orientations of the trackers 12 of the second type may be expressed in the second coordinate system.

Further, in the present embodiment, the position and orientation of the tracker 12 of the first type are measured at a predetermined first sampling rate, and the positions and orientations of the trackers 12 of the second type are measured at a predetermined second sampling rate. In this instance, the first sampling rate and the second sampling rate may be equal to or different from each other.

The entertainment apparatus 14 according to the present embodiment is a computer such as a game console, a DVD (Digital Versatile Disc) player, or a Blu-ray (registered trademark) player. The entertainment apparatus 14 according to the present embodiment generates video and audio, for example, by executing a stored game program or a game program recorded on an optical disk or by reproducing content. Then, the entertainment apparatus 14 according to the present embodiment outputs a video signal representative of the generated video and an audio signal representative of the generated audio to the display 18 through the relay apparatus 16.

As illustrated, for example, in FIG. 2, the entertainment apparatus 14 according to the present embodiment includes a processor 30, a storage section 32, a communication section 34, and an input/output section 36.

The processor 30 is a CPU (Central Processing Unit) or other program control device that operates in accordance with a program installed, for example, in the entertainment apparatus 14. The processor 30 according to the present embodiment includes a GPU (Graphics Processing Unit) that draws an image in a frame buffer according to graphics commands and data supplied from the CPU.

The storage section 32 is, for example, a storage element, such as a ROM (Read-Only Memory) or a RAM (Random Access Memory), or a hard disk drive. The storage section 32 stores, for example, a program that is to be executed by the processor 30. Further, the storage section 32 according to the present embodiment has a frame buffer area where an image is drawn by the GPU.

The communication section 34 is, for example, a communication interface such as a wireless LAN (Local Area Network) module.

The input/output section 36 is an input/output port such as an HDMI (High-Definition Multimedia Interface) (registered trademark) port or a USB (Universal Serial Bus) port.

The relay apparatus 16 according to the present embodiment is a computer that relays video signals and audio signals, which are outputted from the entertainment apparatus 14, and outputs them to the display 18.

The display 18 according to the present embodiment is, for example, a liquid-crystal display, and used to display, for example, video images represented by video signals outputted from the entertainment apparatus 14.

The camera/microphone unit 20 according to the present embodiment includes a camera 20a and a microphone 20b. The camera 20a captures an image, for example, of an object and outputs the captured image to the entertainment apparatus 14. The microphone 20b acquires an ambient sound, converts the ambient sound to audio data, and outputs the audio data to the entertainment apparatus 14. Further, the camera 20a according to the present embodiment is a stereo camera.

The trackers 12 and the relay apparatus 16 are able, for example, to wirelessly transmit and receive data to and from each other. The entertainment apparatus 14 and the relay apparatus 16 are connected, for example, via an HDMI cable or a USB cable, and able to transmit and receive data to and from each other. The relay apparatus 16 and the display 18 are connected, for example, via an HDMI cable. The entertainment apparatus 14 and the camera/microphone unit 20 are connected, for example, via an AUX (Auxiliary) cable.

In the present embodiment, while the game program is executed by the entertainment apparatus 14, various types of processing such as game processing, are performed according to the positions or orientations of a plurality of body parts included in the body of the user represented by a skeleton model 40 illustrated in FIG. 3. Then, video images based on the results of such processing are displayed, for example, on the display 18.

As illustrated in FIG. 3, the skeleton model 40 according to the present embodiment includes a head node 42a, a left hand node 42b, a right hand node 42c, a left foot node 42d, and a right foot node 42e. The head node 42a corresponds to the head of the user wearing the tracker 12a. The left hand node 42b corresponds to the left hand of the user wearing the tracker 12b. The right hand node 42c corresponds to the right hand of the user wearing the tracker 12c. The left foot node 42d corresponds to the left foot of the user wearing the tracker 12d. The right foot node 42e corresponds to the right foot of the user wearing the tracker 12e.

Further, in addition to the above-mentioned nodes 42, the skeleton model 40 includes a chest node 42f, a waist node 42g, a left shoulder node 42h, a left elbow node 42i, and a left wrist node 42j. Further, the skeleton model 40 additionally includes a right shoulder node 42k, a right elbow node 421, a right wrist node 42m, a left knee node 42n, a left ankle node 42o, a right knee node 42p, and a right ankle node 42q.

Here, as illustrated in FIG 3, the head node 42a and the chest node 42f are connected with a link. Further, the chest node 42f and the waist node 42g are connected with a link.

Further, the chest node 42f and the left shoulder node 42h are connected with a link. Further, the left shoulder node 42h and the left elbow node 42i are connected with a link. Additionally, the left elbow node 42i and the left wrist node 42j are connected with a link. Further, the left wrist node 42j and the left hand node 42b are connected with a link.

Further, the chest node 42f and the right shoulder node 42k are connected with a link. Further, the right shoulder node 42k and the right elbow node 421 are connected with a link. Further, the right elbow node 421 and the right wrist node 42m are connected with a link. Additionally, the right wrist node 42m and the right hand node 42c are connected with a link.

Further, the waist node 42g and the left knee node 42n are connected with a link. Further, the left knee node 42n and the left ankle node 42o are connected with a link. Further, the left ankle node 42o and the left foot node 42d are connected with a link.

Further, the waist node 42g and the right knee node 42p are connected with a link. Further, the right knee node 42p and the right ankle node 42q are connected with a link. Further, the right ankle node 42q and the right foot node 42e are connected with a link.

The above-mentioned nodes 42 correspond individually to the body parts included in the body of the user. Further, in the present embodiment, for example, body tracking can be performed based on the positions and orientations identified in relation to the plurality of trackers 12. In such an instance, the present embodiment estimates, for example, the position of each of the plurality of nodes 42 included in the skeleton model 40 relative to a reference position in an initial state and the orientation of each of the plurality of nodes 42 relative to a reference orientation in the initial state.

In the above instance, for example, the position and orientation of the head node 42a can be determined based on data indicating the position and orientation identified in relation to the tracker 12a. Similarly, the position and orientation of the left hand node 42b can be determined based on data indicating the position and orientation identified in relation to the tracker 12b. Further, the position and orientation of the right hand node 42c can be determined based on data indicating the position and orientation identified in relation to the tracker 12c. Further, the position and orientation of the left foot node 42d can be determined based on data indicating the position and orientation identified in relation to the tracker 12d. Further, the position and orientation of the right foot node 42e can be determined based on data indicating the position and orientation identified in relation to the tracker 12e.

Subsequently, the positions and orientations of the other nodes 42 are estimated, for example, by performing inverse kinematics (IK) calculation or machine learning based on data indicating the determined positions and orientations of the head node 42a, the left hand node 42b, the right hand node 42c, the left foot node 42d, and the right foot node 42e.

The trackers 12 have advantages and disadvantages depending on the type. In some cases, therefore, it is preferable that a plurality of types of trackers 12 be used together. Consequently, in a case where the plurality of types of trackers 12 are used together, it is necessary to perform calibration in advance, for example, perform pre-shipment calibration, so that the positions of the plurality of types of trackers 12 can be expressed in a single coordinate system. The calibration needs to be performed while the relative positions and postures of the plurality of types of trackers 12 are fixed.

If the calibration is performed on the assumption that the plurality of types of trackers 12 are at the same position, the result of the calibration is in significant error. Although the occurrence of such an error can possibly be suppressed by performing calibration using advance measurements of relative positions of the plurality of types of trackers 12, it is troublesome to make such advance measurements.

In view of the above circumstances, the present embodiment is configured to be able to calibrate the plurality of types of trackers 12 without measuring their relative positions in advance.

The following further describes the functions of the entertainment apparatus 14 and the processing performed by the entertainment apparatus 14, which are related to the calibration of the trackers 12 in the present embodiment.

FIG. 4 is a functional block diagram illustrating examples of functions implemented by the entertainment apparatus 14 according to the present embodiment. It should be noted that all the functions depicted in FIG. 4 need not be implemented by the entertainment apparatus 14 according to the present embodiment. It should also be noted that functions other than those depicted in FIG. 4 may be implemented.

As illustrated in FIG. 4, the entertainment apparatus 14 according to the present embodiment functionally includes a tracker data acquisition section 50, a tracker data storage section 52, a measurement timing data conversion section 54, a sample data generation section 56, a parameter estimation section 58, and a parameter data storage section 60.

The tracker data acquisition section 50 is implemented mainly for the processor 30 and the input/output section 36. The tracker data storage section 52 and the parameter data storage section 60 are implemented mainly for the storage section 32. The measurement timing data conversion section 54, the sample data generation section 56, and the parameter estimation section 58 are implemented mainly for the processor 30.

The above functions may be implemented by allowing the processor 30 to execute a program that is provided with commands corresponding to the above functions and installed on the entertainment apparatus 14, which is a computer. The program may be supplied to the entertainment apparatus 14 via an optical disk, a magnetic disk, a magnetic tape, a magnetooptical disk, a flash memory, or other computer-readable information storage medium or via, for example, the Internet.

The following describes an example of calibration that is performed by using the tracker 12a, which is the tracker 12 of the first type, and the tracker 12b, which is the tracker 12 of the second type. In this example of calibration, first of all, the user holds both the tracker 12a and the tracker 12b with one hand in such a manner as to fix the relative position and orientation of the tracker 12b relative to the tracker 12a. While maintaining the resulting state, the user freely moves the tracker 12a and the tracker 12b for a certain period of time.

In the present embodiment, the tracker data acquisition section 50 acquires tracker data indicating the results of measurements of the positions and orientations of the trackers 12 that are obtained, for example, during calibration.

In this instance, based on the measurements of the positions and orientations of the trackers 12, the tracker data indicating the results of the measurements may be transmitted from the trackers 12 to the entertainment apparatus 14. Then, the tracker data acquisition section 50 may receive the transmitted tracker data. Alternatively, the tracker data indicating the results of the measurements of the positions and orientations of the trackers 12 may be transmitted to the entertainment apparatus 14, for example, from sensors disposed around the trackers 12. Then, the tracker data acquisition section 50 may receive the transmitted tracker data. It should be noted that, in the present embodiment, identification information regarding the trackers 12 and measurement timing data representing the timing of measurement are associated with the tracker data indicating the results of the measurements of the positions and orientations of the trackers 12.

The tracker data indicative of the position and orientation of the tracker 12a and expressed in the first coordinate system is hereinafter referred to as the first tracker data. Further, the tracker data indicative of the position and orientation of the tracker 12b and expressed in the second coordinate system is hereinafter referred to as the second tracker data.

As described above, the present embodiment measures the position and orientation of the tracker 12a, for example, at the first sampling rate. The tracker data acquisition section 50 then acquires a plurality of pieces of the first tracker data that are measured at the first sampling rate and different from each other in measurement timing. Further, as described above, the present embodiment measures the position and orientation of the tracker 12b, for example, at the second sampling rate. The tracker data acquisition section 50 then acquires a plurality of pieces of the second tracker data that are measured at the second sampling rate and different from each other in measurement timing.

In the present embodiment, the tracker data storage section 52 stores the tracker data that is acquired, for example, by the tracker data acquisition section 50. In this instance, as described above, the tracker data to be stored in the tracker data storage section 52 may be associated with the identification information and measurement timing data regarding the trackers 12. Here, for example, the tracker data storage section 52 stores the above-mentioned plurality of pieces of the first tracker data and the above-mentioned plurality of pieces of the second tracker data.

In the present embodiment, for example, the measurement timing data conversion section 54 converts the measurement timing data associated with either the plurality of pieces of the first tracker data or the plurality of pieces of the second tracker data. The tracker 12 of the first type and the trackers 12 of the second type generally differ in the format for expressing the measurement timing indicated by the measurement timing data. For example, the measurement timing indicated by the measurement timing data regarding the tracker 12 of the first type is expressed by a timestamp value, whereas the measurement timing indicated by the measurement timing data regarding the trackers 12 of the second type is expressed in seconds. Further, the tracker 12 of the first type and the trackers 12 of the second type generally differ in time point that corresponds to a timing having a measurement timing value of 0. Accordingly, the measurement timing data conversion section 54 converts the measurement timing data in order to standardize the format for expressing the measurement timing and the time point corresponding to a timing having a measurement timing value of 0.

Based, for example, on the plurality of pieces of the first tracker data, the measurement timing data conversion section 54 identifies the time series of velocity of the tracker 12a. Further, based, for example, on the plurality of pieces of the second tracker data, the measurement timing data conversion section 54 identifies the time series of velocity of the tracker 12b. FIG. 5 is a schematic diagram illustrating an example of relation between measurement timing data values and velocities regarding the tracker 12a, which is the tracker 12 of the first type. FIG. 6 is a schematic diagram illustrating an example of relation between measurement timing data values and velocities regarding the tracker 12b, which is the tracker 12 of the second type. Here, for example, the measurement timing data associated with the tracker data regarding the tracker 12a may be converted so that the correspondence between the measurement timing data values and velocities regarding the tracker 12a is approximately the same as the correspondence regarding the tracker 12b. It should be noted that the velocities depicted in FIGS. 5 and 6 are norms of velocity.

Here, for example, the measurement timing data associated with the tracker data regarding the tracker 12a may be converted so that measurement timing data values in the case of low velocities may correspond to each other. For example, in a case where the velocities at timings A1 to A7 depicted in FIG. 5 and the velocities at timings B1 to B7 depicted in FIG. 6 are equal to or lower than a predetermined velocity, a well-known interpolation technology may be used to perform conversion so that the measurement timing data values at timings A1 to A7 in FIG. 5 are respectively approximately equal to the measurement timing data values at timings B1 to B7 in FIG. 6. In the above case, the conversion may be performed so that, for example, the measurement timing data values at a timing at which the velocity is 0 are equal to each other.

Due to the conversion performed by the measurement timing data conversion section 54, for example, the measurement timing indicated by the measurement timing data associated with the first tracker data is expressed in seconds. Further, the time points corresponding to timings at which the tracker 12 of the first type and the tracker 12 of the second type have a measurement timing data value of 0 are the same or approximately the same.

It should be noted that the measurement timing data conversion section 54 may convert the measurement timing data according to the time series of acceleration or angular velocity instead of the time series of velocity. Further, the measurement timing data conversion section 54 may convert the measurement timing data according to the norm time series of acceleration or angular velocity instead of the norm time series of velocity. For example, the measurement timing data associated with the tracker data regarding the tracker 12a may be converted so that the correspondence between the measurement timing data value and acceleration regarding the tracker 12a is approximately the same as the correspondence regarding the tracker 12b. Further, for example, the measurement timing data associated with the tracker data regarding the tracker 12a may be converted so that the correspondence between the measurement timing data value and angular velocity regarding the tracker 12a is approximately the same as the correspondence regarding the tracker 12b.

In the present embodiment, the sample data generation section 56 generates, for example, a plurality of pieces of sample data including the first and second tracker data corresponding to each other in measurement timing. In the above instance, for example, a plurality of pieces of sample data including the first and second tracker data that correspond to each other in measurement timing data value may be generated. In this instance, for example, approximately 50 to 200 pieces of sample data may be generated.

Further, according to the time series of at least one of velocity, acceleration, and angular velocity of the first tracker 12a and the time series of at least one of velocity, acceleration, and angular velocity of the second tracker 12b, the sample data generation section 56 may generate the plurality of pieces of the sample data that correspond to each other in measurement timing. Further, according to the norm time series of at least one of velocity, acceleration, and angular velocity of the first tracker 12a and the norm time series of at least one of velocity, acceleration, and angular velocity of the second tracker 12b, the sample data generation section 56 may generate the plurality of pieces of the sample data that correspond to each other in measurement timing. For example, as described earlier, the plurality of pieces of the sample data corresponding to each other in measurement timing may be generated based on the tracker data that is obtained by converting the measurement timing data according to the time series of velocity of the tracker 12a and the time series of velocity of the tracker 12b. It should be noted that the plurality of pieces of the sample data may be generated based on the norm time series of acceleration or angular velocity instead of the norm time series of velocity. Further, the plurality of pieces of the sample data may be generated based on a vector time series instead of the norm time series.

Further, the sample data generation section 56 may generate the plurality of pieces of the sample data according to the first and second tracker data that are selected so as to increase the variation in position or orientation. For example, the plurality of pieces of the sample data may be generated so that the variation in the positions of the tracker 12a and tracker 12b increases as much as possible. Further, for example, the plurality of pieces of the sample data may be generated so that the variation in the orientation of the tracker 12b increases as much as possible.

In the present embodiment, based, for example, on the plurality of pieces of the first tracker data and the plurality of pieces of the second tracker data, the parameter estimation section 58 estimates parameter values for converting the positions expressed in the second coordinate system into expressions in the first coordinate system. Further, in the present embodiment, the parameter estimation section 58 estimates not only the above-mentioned parameter values but also the relative position of the tracker 12b relative to the tracker 12a.

In the above instance, a value Rc, a value P0, and a value Pc are estimated in such a manner as to reduce as much as possible the error between the left and right side values of the numerical expression P1 = Rc × (P2 + R2 × P0) + PC. The root mean square (RMS) of the difference between the left and right side values of the above numerical expression used for performing calculations on each piece of the sample data may be cited as an example index of the above error. In this instance, for example, sequential estimation may be performed by a steepest descent or other appropriate method.

Here, a value P1 is, for example, a three-dimensional coordinate value for representing the position vector of the tracker 12a expressed in the first coordinate system. In this instance, the value P1 is equivalent, for example, to a value representing the position of the tracker 12a, which is indicated by the first tracker data included in the sample data generated by the sample data generation section 56.

Meanwhile, a value P2 is, for example, a three-dimensional coordinate value for representing the position vector of the tracker 12b expressed in the second coordinate system. In this instance, the value P2 is equivalent, for example, to a value representing the position of the tracker 12b, which is indicated by the second tracker data included in the sample data.

Further, a value R2 is, for example, a rotation matrix for representing the rotation of the tracker 12b with respect to a predetermined reference direction expressed in the second coordinate system. In this instance, the value R2 is equivalent, for example, to a value representing the orientation of the tracker 12b, which is indicated by the second tracker data included in the sample data.

Further, the value Rc and the value Pc, which are to be estimated, is equivalent to parameter values for converting the positions expressed in the second coordinate system into expressions in the first coordinate system. For example, the value Rc and the value Pc are the rotation matrix and a translation vector, respectively, for converting the positions expressed in the second coordinate system into expressions in the first coordinate system.

Further, the value P0, which is to be estimated, is equivalent to a value indicating the relative position of the tracker 12b relative to the tracker 12a. The value P0 is, for example, a value indicating the relative position of the tracker 12b, which is indicated by the value P2 and expressed in the second coordinate system, in a case where the reference position is determined by converting the position vector of the tracker 12a, which is indicated by the value P1 and expressed in the first coordinate system, into an expression in the second coordinate system.

In the present embodiment, the parameter data storage section 60 stores, for example, the parameter values for converting the positions expressed in the second coordinate system into expressions in the first coordinate system and parameter data indicating the relative position of the tracker 12b relative to the tracker 12a. In this instance, for example, the parameter estimation section 58 generates the parameter data indicating the values Rc, P0, and Pc obtained at the end of calibration, and stores the generated parameter data in the parameter data storage section 60.

After the end of calibration, body tracking starts while the tracker 12a, the tracker 12b, the tracker 12c, the tracker 12d, and the tracker 12e are worn on the body of the user as depicted in FIG. 1. During the body tracking, the first coordinate system is able to express the positions and orientations of the tracker 12b, the tracker 12c, the tracker 12d, and the tracker 12e according to the parameter data stored in the parameter data storage section 60 as described above. Therefore, all the positions of the tracker 12a, the tracker 12b, the tracker 12c, the tracker 12d, and the tracker 12e can be expressed in a single coordinate system. Consequently, the body tracking is performed based on the positions and orientations of the trackers 12a, 12b, 12c, 12d, and 12e that are expressed in the first coordinate system.

As described above, the present embodiment makes it possible to accurately calibrate a plurality of types of trackers 12 without measuring their relative positions in advance.

Further, when estimating the value P0, the present embodiment, as described above, uses the value R2, which is the rotation matrix for representing the rotation of the tracker 12b with respect to the predetermined reference direction expressed in the second coordinate system. Therefore, a plurality of pieces of the sample data are generated based on the first and second tracker data that are selected so as to increase the variation in orientation. This makes it possible to more accurately estimate the value P0.

Further, the present embodiment allows the tracker 12a and the tracker 12b to be separately used after the above-described estimation is performed by the parameter estimation section 58 during the calibration. Subsequently, after the tracker 12a and the tracker 12b are separately used, recalibration may be performed while the relative position and orientation of the tracker 12b relative to the tracker 12a are fixed so as to be different from the last calibration. Then, in the recalibration, the parameter estimation section 58 may estimate the value P0 that is different from the one estimated during the last calibration. As described above, the present embodiment causes no problem even when the relative position of the tracker 12b relative to the tracker 12a varies from one calibration to another.

An example of processing performed by the entertainment apparatus 14 according to the present embodiment will now be described with reference to the flowchart illustrated in FIG. 7.

In the following description, it is assumed that a plurality of pieces of the first tracker data and a plurality of pieces of the second tracker data are stored in the tracker data storage section 52. Further, it is assumed that the identification information and measurement timing data regarding the trackers 12 are associated with the tracker data as described earlier. Further, it is assumed that the parameter data indicating the values Rc, P0, and Pc, which are set to predetermined initial values, are stored in the parameter data storage section 60.

First of all, the measurement timing data conversion section 54 converts, as described above, the measurement timing data associated with each of the plurality of pieces of the first tracker data (step S101).

Next, the sample data generation section 56 generates a plurality of pieces of the sample data including the first and second tracker data corresponding to each other in measurement timing (step S102).

Next, the parameter estimation section 58 selects one of the plurality of pieces of the sample data that is generated in the processing in step S102 but still not processed in steps S104 and S105 (step S103).

Next, based on the sample data selected in step S103 as described above, the parameter estimation section 58 estimates the values Rc, P0, and Pc in the present loop (step S104).

Next, the parameter estimation section 58 updates the parameter data stored in the parameter data storage section 60 to parameter data indicating the values Rc, P0, and Pc estimated in the processing in step S104 (step S105).

Next, the parameter estimation section 58 confirms whether the processing in steps S104 and S105 is performed on all the pieces of the sample data generated in the processing in step S102 (step S106). If the processing in steps S104 and S105 is still not performed on all the pieces of the sample data generated in the processing in step S102 (N in step S106), the processing returns to step S103. Meanwhile, if it is confirmed that the processing in steps S104 and S105 is performed on all the pieces of the sample data generated in the processing in step S102 (Y in step S106), the processing depicted in the present example terminates.

In the foregoing description, it is assumed that calibration is to be performed before the positions and orientations of the trackers 12a to 12e are identified while they are worn on the body of the user as depicted in FIG. 1.

However, as depicted, for example, in FIG. 8, the tracker 12a and a tracker 12f may be disposed in a housing 70 while the relative position and orientation of the tracker 12f are fixed relative to the tracker 12a. Here, it is assumed that the tracker 12f is the tracker 12 of the second type. Then, in this assumed state, the body tracking may be performed based on the positions and orientations of the trackers 12a, 12b, 12c, 12d, and 12e. Further, the calibration may be performed in real time while the body tracking is being performed.

In the above case, for example, the sample data generation section 56 generates the sample data including the tracker data regarding the tracker 12a and the tracker data regarding the tracker 12f that correspond to each other in measurement timing. Here, the tracker data regarding the tracker 12a is such that the position and orientation of the tracker 12a is expressed in the first coordinate system. Further, the tracker data regarding the tracker 12f is such that the position and orientation of the tracker 12f is expressed in the second coordinate system.

The parameter estimation section 58 then determines whether or not to update the parameter data according to the sample data.

If, in the above instance, for example, the position indicated by the sample data is at a certain distance from the position indicated by previous sample data already used for estimation, the parameter estimation section 58 may determine to update the parameter data according to the sample data. For example, if the position indicated by the sample data is at a predetermined or longer distance from the average position indicated by previous sample data already used for estimation, the parameter estimation section 58 may determine to update the parameter data according to the sample data.

Further, if, for example, the orientation of the tracker 12f, which is indicated by the sample data, is more or less biased away from the orientation of the tracker 12 that is indicated by previous sample data already used for estimation, the parameter estimation section 58 may determine to update the parameter data according to the sample data. For example, if the orientation of the tracker 12f, which is indicated by the sample data, is at a predetermined or greater angle from the average orientation of the tracker 12f, which is indicated by previous data already used for estimation, the parameter estimation section 58 may determine to update the parameter data according to the sample data.

The parameter estimation section 58 may then estimate the values Rc, P0, and Pc in the loop according to the sample data used for determining to update the parameter data. Subsequently, the parameter estimation section 58 may update the parameter data stored in the parameter data storage section 60 to parameter data indicating the estimated values Rc, P0, and Pc.

The above-described processing makes it possible to perform real-time calibration during the body tracking (i.e., the estimation of parameter values and the update of parameter data in the above instance).

Further, in the present embodiment, operations may be performed in such a manner that the position and orientation of the tracker 12 of the second type are expressed as the relative position and orientation relative to the tracker 12 of the first type. For example, in a case where a position P1 is the origin, the position vector of a position P2 converted into an expression in the first coordinate system may be used as the position vector of the tracker 12b. Further, if, in the above case, the relative position and orientation of the tracker 12f are not fixed relative to the tracker 12a as depicted in FIG. 8, the pre-shipment calibration cannot be performed. For example, in a situation where the origin of the tracker 12 of the first type and the origin of the tracker 12 of the second type can be set as desired by the user, the pre-shipment calibration cannot be performed. Even in a case where the above-mentioned pre-shipment calibration cannot be performed, the present embodiment enables the user to easily perform calibration in the above-described manner.

It should be noted that the present invention is not limited to the above-described embodiment.

For example, the method of tracking by the trackers 12 is not limited to the above-described method of using the SLAM technology and the above-described method based on the results of detection by a plurality of sensors disposed around the trackers 12. For example, the trackers 12 may include various sensors such as a camera, an inertial sensor (IMU), a geomagnetic sensor (orientation sensor), an acceleration sensor, a motion sensor, and a GPS module. The positions and orientations of the trackers 12 may then be identified based on the results of measurements made by the sensors included in the trackers 12.

Further, some or all of the functions depicted in FIG. 4 need not always be implemented by the entertainment apparatus 14. For example, some or all of the functions depicted in FIG. 4 may be implemented by one of the trackers 12.

Further, the foregoing specific character strings and numerical values and the character strings and numerical values in the accompanying drawings are merely illustrative and not restrictive.

## Claims

1. A tracker calibration apparatus comprising:
a first tracker data acquisition section (50) that acquires a plurality of pieces of first tracker data, the first tracker data indicating a position of a first tracker (12a), the position of the first tracker (12a) being measured during calibration and expressed in a first coordinate system, the calibration being performed while relative position and orientation of a second tracker (12b, 12c, 12d, 12e) are fixed relative to the first tracker (12a);
a second tracker data acquisition section (50) that acquires a plurality of pieces of second tracker data, the second tracker data indicating the position and orientation of the second tracker (12b, 12c, 12d, 12e), the position and orientation of the second tracker (12b, 12c, 12d, 12e) being measured during the calibration and expressed in a second coordinate system independent of the first coordinate system; and
an estimation section (58) that, based on the plurality of pieces of the first tracker data and the plurality of pieces of the second tracker data, estimates parameter values for converting the positions expressed in the second coordinate system into expressions in the first coordinate system and the relative position of the second tracker (12b, 12c, 12d, 12e) relative to the first tracker (12a),the tracker calibration apparatus further comprising:
a sample data generation section (56) that generates a plurality of pieces of sample data including the first and second tracker data associated with each other in measurement timing,
wherein, based on the plurality of pieces of the sample data, the estimation section (58) estimates parameter values for converting the positions expressed in the second coordinate system into expressions in the first coordinate system and the relative position of the second tracker relative to the first tracker, wherein, according to time series of at least one of acceleration and angular velocity measurements of the first tracker (12a) that is identified, by a measurement timing data conversion section (54), based on the plurality of pieces of the first tracker data and time series of at least one of acceleration and angular velocity measurements of the second tracker (12b, 12c, 12d, 12e) that is identified, by the measurement timing data conversion section (54), based on the plurality of pieces of the second tracker data, the sample data generation section generates the plurality of pieces of the sample data that correspond to each other in measurement timing.

2. The tracker calibration apparatus according to claim 1,
wherein the sample data generation section (56) generates the plurality of pieces of the sample data according to the first and second tracker data selected in such a manner as to increase variation in orientation.

3. The tracker calibration apparatus according to claim 1 or 2, wherein said time series of at least one of acceleration and angular velocity of the first tracker (12a) (12a) is complemented by a time series of velocity of the first tracker (12a), and wherein said time series of acceleration
and angular velocity of the second tracker (12b, 12c, 12d, 12e) is complemented by a time series of velocity of the second tracker (12b, 12c, 12d, 12e, wherein the sample data generation section (56) generates the plurality of pieces of the sample data that correspond to each other in measurement timing further as to the time series of velocity.

4. The tracker calibration apparatus according to claim 3,
wherein, according to norm time series of at least one of velocity, acceleration, and angular velocity of the first tracker (12a) and norm time series of at least one of velocity, acceleration, and angular velocity of the second tracker (12b, 12c, 12d, 12e) that are identified based on the plurality of pieces of the second tracker data, the sample data generation section generates the plurality of pieces of the sample data that correspond to each other in measurement timing.

5. The tracker calibration apparatus according to any one of claims 1 to 4,
wherein the first tracker (12a) and the second tracker (12b, 12c, 12d, 12e) are disposed in a housing while the relative position and orientation of the second tracker (12b, 12c, 12d, 12e) are fixed relative to the first tracker (12a).

6. The tracker calibration apparatus according to any one of claims 1 to 5,
wherein the first tracker (12a) and the second tracker (12b, 12c, 12d, 12e) are different types of trackers.

7. The tracker calibration apparatus according to any one of claims 1 to 6,
wherein, after the parameter values for converting the positions expressed in the second coordinate system into the expressions in the first coordinate system and the relative position of the second tracker relative to the first tracker are estimated by the estimation section (58) during the calibration, the first tracker (12a) and the second tracker (12b, 12c, 12d, 12e) are separately usable, and,
during the calibration performed again in a state where the relative position and orientation of the second tracker (12b, 12c, 12d, 12e) relative to the first tracker (12a) are fixed so as to be different from those estimated during the last calibration after the separate use of the first and second trackers (12a, 12b, 12c, 12d, 12e), the estimation section estimates the relative position of the second tracker (12b, 12c, 12d, 12e) relative to the first tracker (12a) that is different from the relative position estimated during the last calibration.

8. A tracker calibration method comprising the steps of:
acquiring a plurality of pieces of first tracker data, the first tracker data indicating a position of a first tracker (12a), the position of the first tracker (12a) being measured during calibration and expressed in a first coordinate system, the calibration being performed while relative position and orientation of a second tracker (12b, 12c, 12d, 12e) are fixed relative to the first tracker (12a);
acquiring a plurality of pieces of second tracker data, the second tracker data indicating the position and orientation of the second tracker (12b, 12c, 12d, 12e), the position and orientation of the second tracker (12b, 12c, 12d, 12e) being measured during the calibration and expressed in a second coordinate system independent of the first coordinate system; and
based on the plurality of pieces of the first tracker data and the plurality of pieces of the second tracker data, estimating parameter values for converting the positions expressed in the second coordinate system into expressions in the first coordinate system and the relative position of the second tracker (12b, 12c, 12d, 12e) relative to the first tracker (12a), the method further comprising:
generating a plurality of pieces of sample data including the first and second tracker data associated with each other in measurement timing,
estimating, based on the plurality of pieces of the sample data, parameter values for converting the positions expressed in the second coordinate system into expressions in the first coordinate system and the relative position of the second tracker relative to the first tracker (12a), wherein,
according to time series of at least one of acceleration and angular velocity measurements of the first tracker (12a) that is identified, by a measurement timing data conversion correspondence, based on the plurality of pieces of the first tracker data and time series of at least one of acceleration and angular velocity measurements of the second tracker (12b, 12c, 12d, 12e) that is identified, by the measurement timing data conversion correspondence, based on the plurality of pieces of the second tracker data, the plurality of pieces of the sample data that correspond to each other in measurement timing is generated.

9. A program comprising instructions which, when executed by a computer, cause the computer to execute the method of claim 8.

## Patentansprüche

1. Tracker-Kalibrierungsvorrichtung, umfassend:
einen ersten Tracker-Datenerfassungsabschnitt (50), der eine Vielzahl von Stücken von ersten Tracker-Daten erfasst, wobei die ersten Tracker-Daten eine Position eines ersten Trackers (12a) angeben, die Position des ersten Trackers (12a) während einer Kalibrierung gemessen und in einem ersten Koordinatensystem ausgedrückt wird, die Kalibrierung durchgeführt wird, während die relative Position und Ausrichtung eines zweiten Trackers (12b, 12c, 12d, 12e) relativ zu dem ersten Tracker (12a) fixiert sind;
einen zweiten Tracker-Datenerfassungsabschnitt (50), der eine Vielzahl von zweiten Tracker-Daten erfasst, wobei die zweiten Tracker-Daten die Position und Ausrichtung des zweiten Trackers (12b, 12c, 12d, 12e) angeben, die Position und Ausrichtung des zweiten Trackers (12b, 12c, 12d, 12e) während der Kalibrierung gemessen und in einem zweiten Koordinatensystem ausgedrückt werden, das unabhängig von dem ersten Koordinatensystem ist; und
einen Schätzabschnitt (58), der, basierend auf der Vielzahl von Stücken der ersten Tracker-Daten und der Vielzahl von Stücken der zweiten Tracker-Daten, Parameterwerte zum Umwandeln der Positionen, die in dem zweiten Koordinatensystem ausgedrückt werden, in Ausdrücke in dem ersten Koordinatensystem und die relative Position des zweiten Trackers (12b, 12c, 12d, 12e) relativ zu dem ersten Tracker (12a) schätzt, die Tracker-Kalibrierungsvorrichtung ferner umfassend:
einen Beispieldatenerzeugungsabschnitt (56), der eine Vielzahl von Stücken von Beispieldaten erzeugt, die die ersten und die zweiten Tracker-Daten einschließen, die miteinander zu dem Messzeitpunkt verknüpft sind,
wobei, basierend auf der Vielzahl von Stücken der Beispieldaten, der Schätzabschnitt (58) Parameterwerte zum Umwandeln der Positionen, die in dem zweiten Koordinatensystem ausgedrückt werden, in Ausdrücke in dem ersten Koordinatensystem und die relative Position des zweiten Trackers relativ zu dem ersten Tracker schätzt, wobei, gemäß einer Zeitreihe von mindestens einem von Beschleunigungs- und Winkelgeschwindigkeitsmessungen des ersten Trackers (12a), der identifiziert wird, durch einen Messzeitpunktdatenumwandlungsabschnitt (54), basierend auf der Vielzahl von Stücken der Daten des ersten Trackers und der Zeitreihe von mindestens einem von Beschleunigungs- und Winkelgeschwindigkeitsmessungen des zweiten Trackers (12b, 12c, 12d, 12e), der identifiziert wird, durch den Messzeitpunktdatenumwandlungsabschnitt (54), basierend auf der Vielzahl von Stücken der zweiten Tracker-Daten, der Beispieldatenerzeugungsabschnitt die Vielzahl von Stücken der Beispieldaten erzeugt, die einander zu dem Messzeitpunkt entsprechen.

2. Tracker-Kalibrierungsvorrichtung nach Anspruch 1,
wobei der Beispieldatenerzeugungsabschnitt (56) die Vielzahl von Stücken von Beispieldaten gemäß den ersten und den zweiten Tracker-Daten erzeugt, die derart ausgewählt sind, dass eine Variation in der Ausrichtung erhöht wird.

3. Tracker-Kalibrierungsvorrichtung nach Anspruch 1 oder 2,
wobei die Zeitreihe von mindestens einem von Beschleunigung und Winkelgeschwindigkeit des ersten Trackers (12a) (12a) durch eine Zeitreihe der Geschwindigkeit des ersten Trackers (12a) ergänzt wird, und wobei die Zeitreihe der Beschleunigung und der Winkelgeschwindigkeit des zweiten Trackers (12b, 12c, 12d, 12e) durch eine Zeitreihe der Geschwindigkeit des zweiten Trackers (12b, 12c, 12d, 12e) ergänzt wird, wobei der Beispieldatenerzeugungsabschnitt (56) die Vielzahl von Stücken von Beispieldaten erzeugt, die zu dem Messzeitpunkt eher einander als der Zeitreihe der Geschwindigkeit entsprechen.

4. Tracker-Kalibrierungsvorrichtung nach Anspruch 3,
wobei, gemäß Normzeitreihen von mindestens einem von Geschwindigkeit, Beschleunigung und Winkelgeschwindigkeit des ersten Trackers (12a) und Normzeitreihen von mindestens einem von Geschwindigkeit, Beschleunigung und Winkelgeschwindigkeit des zweiten Trackers (12b, 12c, 12d, 12e), die basierend auf der Vielzahl von Stücken der Daten des zweiten Trackers identifiziert werden, der Beispieldatenerzeugungsabschnitt die Vielzahl von Stücken der Beispieldaten erzeugt, die einander zu dem Messzeitpunkt entsprechen.

5. Tracker-Kalibrierungsvorrichtung nach einem der Ansprüche 1 bis 4,
wobei der erste Tracker (12a) und der zweite Tracker (12b, 12c, 12d, 12e) in einem Gehäuse angeordnet sind, während die relative Position und Ausrichtung des zweiten Trackers (12b, 12c, 12d, 12e) relativ zu dem ersten Tracker (12a) fixiert sind.

6. Tracker-Kalibrierungsvorrichtung nach einem der Ansprüche 1 bis 5,
wobei der erste Tracker (12a) und der zweite Tracker (12b, 12c, 12d, 12e) unterschiedliche Arten von Trackern sind.

7. Tracker-Kalibrierungsvorrichtung nach einem der Ansprüche 1 bis 6,
wobei, nachdem die Parameterwerte zum Umwandeln der Positionen, die in dem zweiten Koordinatensystem ausgedrückt werden, in die Ausdrücke in dem ersten Koordinatensystem und die relative Position des zweiten Trackers relativ zu dem ersten Tracker durch den Schätzabschnitt (58) während der Kalibrierung geschätzt wurden, der erste Tracker (12a) und der zweite Tracker (12b, 12c, 12d, 12e) separat verwendbar sind, und
während der Kalibrierung, die erneut in einem Zustand durchgeführt wird, in dem die relative Position und Ausrichtung des zweiten Trackers (12b, 12c, 12d, 12e) relativ zu dem ersten Tracker (12a) fixiert sind, um sich von denen zu unterscheiden, die während der letzten Kalibrierung nach der getrennten Verwendung des ersten und des zweiten Trackers (12a, 12b, 12c, 12d, 12e) geschätzt werden, der Schätzabschnitt die relative Position des zweiten Trackers (12b, 12c, 12d, 12e) relativ zu dem ersten Tracker (12a) schätzt, die sich von der relativen Position unterscheidet, die während der letzten Kalibrierung geschätzt wird.

8. Tracker-Kalibrierungsverfahren, umfassend die Schritte: Erfassen einer Vielzahl von Stücken von ersten Tracker-Daten, wobei die ersten Tracker-Daten eine Position eines ersten Trackers (12a) angeben, wobei die Position des ersten Trackers (12a) während der Kalibrierung gemessen und in einem ersten Koordinatensystem ausgedrückt wird, wobei die Kalibrierung durchgeführt wird, während die relative Position und Ausrichtung eines zweiten Trackers (12b, 12c, 12d, 12e) relativ zu dem ersten Tracker (12a) fixiert sind;
Erfassen einer Vielzahl von Daten des zweiten Trackers, wobei die Daten des zweiten Trackers die Position und Ausrichtung des zweiten Trackers (12b, 12c, 12d, 12e) angeben, wobei die Position und Ausrichtung des zweiten Trackers (12b, 12c, 12d, 12e) während der Kalibrierung gemessen und in einem zweiten Koordinatensystem ausgedrückt werden, das von dem ersten Koordinatensystem unabhängig ist; und
basierend auf der Vielzahl von Stücken der ersten Tracker-Daten und der Vielzahl von Stücken der zweiten Tracker-Daten, Schätzen von Parameterwerten zum Umwandeln der Positionen, die in dem zweiten Koordinatensystem ausgedrückt werden, in Ausdrücke in dem ersten Koordinatensystem und der relativen Position des zweiten Trackers (12b, 12c, 12d, 12e) relativ zu dem ersten Tracker (12a), das Verfahren ferner umfassend:
Erzeugen einer Vielzahl von Stücken von Beispieldaten einschließlich der ersten und der zweiten Tracker-Daten , die einander zu dem Messzeitpunkt zugeordnet sind,
Schätzen, basierend auf der Vielzahl von Stücken der Beispieldaten, der Parameterwerte zum Umwandeln der Positionen, die in dem zweiten Koordinatensystem ausgedrückt werden, in Ausdrücke in dem ersten Koordinatensystem und der relativen Position des zweiten Trackers relativ zu dem ersten Tracker (12a), wobei, gemäß der Zeitreihe von mindestens einem von Beschleunigungs- und Winkelgeschwindigkeitsmessungen des ersten Trackers (12a), der identifiziert wird, durch einen Messzeitpunktdatenumwandlungsabschnitt, basierend auf der Vielzahl von Stücken der ersten Tracker-Daten und der Zeitreihe von mindestens einem von Beschleunigungs- und Winkelgeschwindigkeitsmessungen des zweiten Trackers (12b, 12c, 12d, 12e), der identifiziert wird, durch den Messzeitpunktdatenumwandlungsabschnitt, basierend auf der Vielzahl von Stücken der zweiten Tracker-Daten, der Beispieldatenerzeugungsabschnitt die Vielzahl von Stücken der Beispieldaten erzeugt, die einander zu dem Messzeitpunkt entsprechen.

9. Computerprogramm, umfassend Anweisungen, die, wenn sie durch einen Computer ausgeführt werden, den Computer dazu veranlassen, das Verfahren nach Anspruch 8 auszuführen.

## Revendications

1. Appareil d'étalonnage de dispositif de suivi comprenant :
une première section d'acquisition de données de dispositif de suivi (50) qui acquiert une pluralité d'éléments de premières données de dispositif de suivi, les premières données de dispositif de suivi indiquant une position d'un premier dispositif de suivi (12a), la position du premier dispositif de suivi (12a) étant mesurée pendant un étalonnage et exprimée dans un premier système de coordonnées, l'étalonnage étant effectué alors qu'une position relative et une orientation d'un second dispositif de suivi (12b, 12c, 12d, 12e) sont fixes par rapport au premier dispositif de suivi (12a) ;
une seconde section d'acquisition de données de dispositif de suivi (50) qui acquiert une pluralité d'éléments de secondes données de dispositif de suivi, les secondes données de dispositif de suivi indiquant la position et l'orientation du second dispositif de suivi (12b, 12c, 12d, 12e), la position et l'orientation du second dispositif de suivi (12b, 12c, 12d, 12e) étant mesurées pendant l'étalonnage et exprimées dans un second système de coordonnées indépendant du premier système de coordonnées ; et
une section d'estimation (58) qui, sur la base de la pluralité d'éléments des premières données de dispositif de suivi et de la pluralité d'éléments des secondes données de dispositif de suivi, estime des valeurs de paramètres pour convertir les positions exprimées dans le second système de coordonnées en expressions dans le premier système de coordonnées et la position relative du second dispositif de suivi (12b, 12c, 12d, 12e) par rapport au premier dispositif de suivi (12a), l'appareil d'étalonnage de dispositif de suivi comprenant en outre :
une section de génération de données d'échantillon (56) qui génère une pluralité d'éléments de données d'échantillon comportant les premières et secondes données de dispositif de suivi associées les unes aux autres en termes de synchronisation de mesure,
dans lequel, sur la base de la pluralité d'éléments des données d'échantillon, la section d'estimation (58) estime des valeurs de paramètres pour convertir les positions exprimées dans le second système de coordonnées en expressions dans le premier système de coordonnées et la position relative du second dispositif de suivi par rapport au premier dispositif de suivi, dans lequel, selon une série temporelle d'au moins l'une parmi des mesures d'accélération et de vitesse angulaire du premier dispositif de suivi (12a) qui est identifiée, par une section de conversion de données de synchronisation de mesure (54), sur la base de la pluralité d'éléments des premières données de dispositif de suivi et de la série temporelle d'au moins l'une parmi des mesures d'accélération et de vitesse angulaire du second dispositif de suivi (12b, 12c, 12d, 12e) qui est identifiée par la section de conversion de données de synchronisation de mesure (54), sur la base de la pluralité d'éléments des secondes données de dispositif de suivi, la section de génération de données d'échantillon génère la pluralité d'éléments des données d'échantillon qui correspondent les uns aux autres en termes de synchronisation de mesure.

2. Appareil d'étalonnage de dispositif de suivi selon la revendication 1,
dans lequel la section de génération de données d'échantillon (56) génère la pluralité d'éléments des données d'échantillon selon les premières et secondes données de dispositif de suivi sélectionnées de manière à augmenter une variation d'orientation.

3. Appareil d'étalonnage de dispositif de suivi selon la revendication 1 ou 2,
dans lequel ladite série temporelle d'au moins l'une parmi une accélération et une vitesse angulaire du premier dispositif de suivi (12a) (12a) est complétée par une série temporelle d'une vitesse du premier dispositif de suivi (12a), et dans lequel ladite série temporelle d'une accélération
et d'une vitesse angulaire du second dispositif de suivi (12b, 12c, 12d, 12e) est complétée par une série temporelle d'une vitesse du second dispositif de suivi (12b, 12c, 12d, 12e), dans lequel la section de génération de données d'échantillon (56) génère la pluralité d'éléments des données d'échantillon qui correspondent les uns aux autres en termes de synchronisation de mesure ainsi que dans la série temporelle d'une vitesse.

4. Appareil d'étalonnage de dispositif de suivi selon la revendication 3,
dans lequel, selon une série temporelle standard d'au moins l'une parmi une vitesse, une accélération et une vitesse angulaire du premier dispositif de suivi (12a) et une série temporelle standard d'au moins l'une parmi une vitesse, une accélération et une vitesse angulaire du second dispositif de suivi (12b, 12c, 12d, 12e) qui sont identifiées sur la base de la pluralité d'éléments des secondes données de dispositif de suivi, la section de génération de données d'échantillon génère la pluralité d'éléments des données d'échantillon qui correspondent les uns aux autres en termes de synchronisation de mesure.

5. Appareil d'étalonnage de dispositif de suivi selon l'une quelconque des revendications 1 à 4 ;
dans lequel le premier dispositif de suivi (12a) et le second dispositif de suivi (12b, 12c, 12d, 12e) sont disposés dans un boîtier alors que la position relative et l'orientation du second dispositif de suivi (12b, 12c, 12d, 12e) sont fixes par rapport au premier dispositif de suivi (12a).

6. Appareil d'étalonnage de dispositif de suivi selon l'une quelconque des revendications 1 à 5,
dans lequel le premier dispositif de suivi (12a) et le second dispositif de suivi (12b, 12c, 12d, 12e) sont des types de dispositifs de suivi différents.

7. Appareil d'étalonnage de dispositif de suivi selon l'une quelconque des revendications 1 à 6,
dans lequel, après les valeurs de paramètres pour convertir les positions exprimées dans le second système de coordonnées en expressions dans le premier système de coordonnées et la position relative du second dispositif de suivi par rapport au premier dispositif de suivi ont été estimées par la section d'estimation (58) pendant l'étalonnage, le premier dispositif de suivi (12a) et le second dispositif de suivi (12b, 12c, 12d, 12e) sont utilisables séparément, et,
pendant l'étalonnage effectué à nouveau dans un état où la position relative et l'orientation du second dispositif de suivi (12b, 12c, 12d, 12e) par rapport au premier dispositif de suivi (12a) sont fixées de manière à être différentes de celles estimées pendant le dernier étalonnage après l'utilisation séparée des premier et second dispositifs de suivi (12a, 12b, 12c, 12d, 12e), la section d'estimation estime la position relative du second dispositif de suivi (12b, 12c, 12d, 12e) par rapport au premier dispositif de suivi (12a) qui est différente de la position relative estimée pendant le dernier étalonnage.

8. Procédé d'étalonnage de dispositif de suivi comprenant les étapes consistant à : acquérir une pluralité d'éléments de premières données de dispositif de suivi, les premières données de dispositif de suivi indiquant la position d'un premier dispositif de suivi (12a), la position du premier dispositif de suivi (12a) étant mesurée pendant l'étalonnage et exprimée dans un premier système de coordonnées, l'étalonnage étant effectué alors que la position relative et l'orientation d'un second dispositif de suivi (12b, 12c, 12d, 12e) sont fixes par rapport au premier dispositif de suivi (12a) ;
acquérir une pluralité d'éléments de secondes données de dispositif de suivi, les secondes données de dispositif de suivi indiquant la position et l'orientation du second dispositif de suivi (12b, 12c, 12d, 12e), la position et l'orientation du second dispositif de suivi (12b, 12c, 12d, 12e) étant mesurées pendant l'étalonnage et exprimées dans un second système de coordonnées indépendant du premier système de coordonnées ; et
sur la base de la pluralité d'éléments des premières données de dispositif de suivi et de la pluralité d'éléments des secondes données de dispositif de suivi, estimer les valeurs de paramètres pour convertir les positions exprimées dans le second système de coordonnées en expressions dans le premier système de coordonnées et la position relative du second dispositif de suivi (12b, 12c, 12d, 12e) par rapport au premier dispositif de suivi (12a), le procédé comprenant en outre :
la génération d'une pluralité d'éléments de données d'échantillon comportant les premières et secondes données de dispositif de suivi associées les unes aux autres en termes de synchronisation de mesure,
l'estimation, sur la base de la pluralité d'éléments des données d'échantillon, de valeurs de paramètres pour convertir les positions exprimées dans le second système de coordonnées en expressions dans le premier système de coordonnées et la position relative du second dispositif de suivi par rapport au premier dispositif de suivi (12a), dans lequel, selon la série temporelle d'au moins l'une parmi les mesures d'accélération et de vitesse angulaire du premier dispositif de suivi (12a) qui est identifiée, par une correspondance de conversion de données de synchronisation de mesure, sur la base de la pluralité d'éléments des premières données de dispositif de suivi et la série temporelle d'au moins l'une parmi des mesures d'accélération et de vitesse angulaire du second dispositif de suivi (12b, 12c, 12d, 12e) qui est identifiée, par la correspondance de conversion de données de synchronisation de mesure, sur la base de la pluralité d'éléments des secondes données de dispositif de suivi, la pluralité d'éléments des données d'échantillon qui correspondent les uns aux autres en termes de synchronisation de mesure est générée.

9. Programme comprenant des instructions qui, lorsqu'elles sont exécutées par un ordinateur, amène l'ordinateur à exécuter le procédé selon la revendication 8.
